# EUROPÄISCHE PATENTANMELDUNG

(11) **EP 2 965 796 A1**
(43) Veröffentlichungstag der Anmeldung: **13.01.2016**
(21) Anmeldenummer: 15173726.9
(22) Anmeldetag: 25.06.2015
(51) Int. Cl.: B01D 29/35, B01D 29/76, B01D 29/94

(54) **FILTER**

(30) Priorität: 04.07.2014 AT 504702014
(71) Anmelder: Banny, Klaus, 1020 Wien (AT); Banny-Reiter, Ulrike, 1020 Wien (AT); Hartl, Robert, 2453 Sommerein (AT); Hartl, Andrea, 2453 Sommerein (AT)
(72) Erfinder: Banny, Klaus, 1020 Wien (AT); Banny-Reiter, Ulrike, 1020 Wien (AT); Hartl, Robert, 2453 Sommerein (AT); Hartl, Andrea, 2453 Sommerein (AT)
(74) Vertreter: Patentanwälte Barger, Piso & Partner

(57) **Zusammenfassung**

Die Erfindung betrifft ein Filter (1) für Fluide mit groben Verunreinigungen, insbesondere Schmutzwasserfilter, mit einem Schmutzwasserzulauf (2), einem Reinwasserablauf (3) und einem dazwischen liegenden Filtergehäuse, in dem ein Filter zum Ausfiltern von Verunreinigungen vorgesehen ist.

Um die Filterwirksamkeit (Standzeit und Druckabfall) zu verbessern ist vorgesehen, dass das Filter ein zumindest im Wesentlichen vertikales Rohrfilter (4) ist, dessen Innenbereich mit dem Schmutzwasserzulauf (2) in Fluidverbindung steht und dessen Äußeres mit dem Reinwasserablauf (3) in Fluidverbindung steht, dass der Mantel des Rohrfilters (4) mit Filteröffnungen (5) versehen ist, dass der untere Bereich des Mantels durchgehend ausgebildet ist und einen sumpf (6) ausbildet.

## Beschreibung

Die Erfindung betrifft ein Fluidfilter, insbesondere ein Schmutzwasserfilter, entsprechend dem Oberbegriff des Anspruches 1.

Ein anderer Fluidfilter, nämlich zur Abtrennung kleinster bzw. feinster Schwebstoffe, ist aus der DE 31 16 875 bekannt. Dabei sind zumindest zwei konzentrisch zueinander mit vertikaler Achse angeordnete, zylindrische Filterelemente vorgesehen, zur Reinigung dient ein spezielles Rückspülsystem. Für grobe Verunreinigungen ist diese Vorrichtung unbrauchbar.

Aus der JP H01 165 838 ist eine Sickergrube mit Vorfilter bekannt, bei dem grobe Verunreinigungen an einem eigenen Sieb zurückgehalten werden, um ein Versotten zu vermeiden.

Aus dem CN 202 506 180 U ist ein komplexes System zur Reinigung eines Fluids mit Vorreinigung und dem periodischen Einsatz einer Reinigungsflüssigkeit zur Reinigung des Filters bekannt, das aufwändig, teuer und wartungsintensiv ist. Für eine übliche Reinigung von Schmutzwasser oder ähnlichen Fluiden ist diese Vorrichtung, die die Flüssigkeit, die beim Nassschneiden mit einem Laser verwendet wird, zu komplex.

Filter der eingangs genannten Art, insbesondere Schmutzwasserfilter, - in der Folge wird der Einfachheit halber nur von diesen gesprochen - sind vielfach bekannt und müssen in der Lage sein, grobe Verunreinigungen des durch sie fließenden Wassers zurückzuhalten, zumeist, um die in Strömungsrichtung hinter ihnen liegende Pumpe vor dem Verstopfen zu bewahren. Es gibt auch andere Anwendungsgebiete, beispielsweise als Vorfilter vor entsprechenden Feinfiltern und dergleichen mehr.

Derartige Filter sollen nun in der Lage sein, auch nach dem Abfangen einer gewissen Menge an Verunreinigungen ohne großen Druckverlust durch den sich ausbildenden Filterkuchen weiter betrieben werden zu können, und sie sollen darüber hinaus leicht zu reinigen sein. Besonders letzteres ist nicht immer einfach, da die Verschmutzungen zum Steckenbleiben in den Filteröffnungen neigen.

Es ist Aufgabe der Erfindung, ein derartiges Filter anzugeben.

Die erfindungsgemäßen Aufgaben werden durch ein Filter mit den Merkmalen des kennzeichnenden Teils des Anspruches 1 gelöst, mit anderen Worten, durch ein im Wesentlichen vertikal angeordnetes Rohrfilter, dem das Schmutzwasser von oben zugeführt wird und das Fluid - mit Durchgangspartikeln - durch Löcher in der Mantelwand im Wesentlichen radial nach außen strömt, wobei im unteren Teil des an seinem unten geschlossenen Rohrfilters ein von Öffnungen freier Bodenbereich, ein sogenannter Sumpf, ausgebildet ist. Vertikal angerordnet bezieht sich dabei auf den Verlauf der Achse des Rohrfilters, unter "im Wesentlichen" sind Abweichungen bis 30° von der Vertikalen gemeint. "Im Wesentlichen radial" bezieht sich auf die praktisch immer auftretende Umfangskomponente und auch auf die axiale Komponente, die wegen der Zufuhr und Abfuhr des Fluids unvermeidlich ist. Dazu können auch gewollte Richtungsanpassungen treten.

Durch diese Maßnahmen erreicht man es, dass vom Rohrfilter zurückgehaltene Verunreinigungen, teilweise während des Betriebs, teilweise während Betriebspausen, aus dem perforierten Bereich, in dem die eigentliche Filtration erfolgt, in den von Filteröffnungen freien unteren Bereich, den Sumpf, gelangt und das weitere Filtern nicht beeinträchtigt. Erst wenn der Sumpf gefüllt ist, ist es notwendig eine Reinigung des Filters vorzunehmen.

Eine Variante der Erfindung ist besonders in solchen Anwendungsfällen nützlich, bei denen die zum Filter führende Schmutzwasserleitung und die mit ihr in Verbindung stehenden Armaturen und Anlagen, wie beispielsweise WC-Anlagen, WC-Sammelbehälter, etc. im Gegenstrom gespült und gereinigt werden sollen. Dies erfordert im Stand der Technik die Abtrennung der Schmutzwasserleitung vom Filter und die Verbindung mit einer eigenen Zufuhrleitung, da ansonsten beim Rückspülen die im Filter angesammelten ausgefilterten Stoffe (Filterkuchen) in die gerade durchgespülte Leitung zurückgetragen werden.

Um bei solchen Fällen diese unangenehme und zeitraubende Tätigkeit zu vermeiden, ist in Ausgestaltung der Erfindung vorgesehen, dass ein Rohr außerhalb, bevorzugt konzentrisch zum Filterrohr vorgesehen ist, das über deutliche größere Öffnungen in seinem Mantel verfügt, als es die Filteröffnungen im Rohrfilter sind, wobei, weiters bevorzugt, diese Öffnungen nur in den Höhenbereichen vorgesehen sind, in denen im Rohrfilter die Filteröffnungen vorgesehen sind.

Durch diese Maßnahme erreicht man es, dass beim Rückspülen der Schmutzwasserleitung (dies ist vom Rückspülen des Filters zur Entfernung des Filterkuchens streng zu unterscheiden) die Strömung der Rückspülflüssigkeit im Bereich der Filteröffnungen beruhigt und im Wesentlichen radial in das Rohrfilter eintritt und nach oben, zur Schmutzwasserleitung umbiegt, ohne merkliche Turbulenzen zu bilden, so dass es die im Sumpf befindlichen abgeschiedenen Fremdkörper und Verunreinigungen nicht mitreißt.

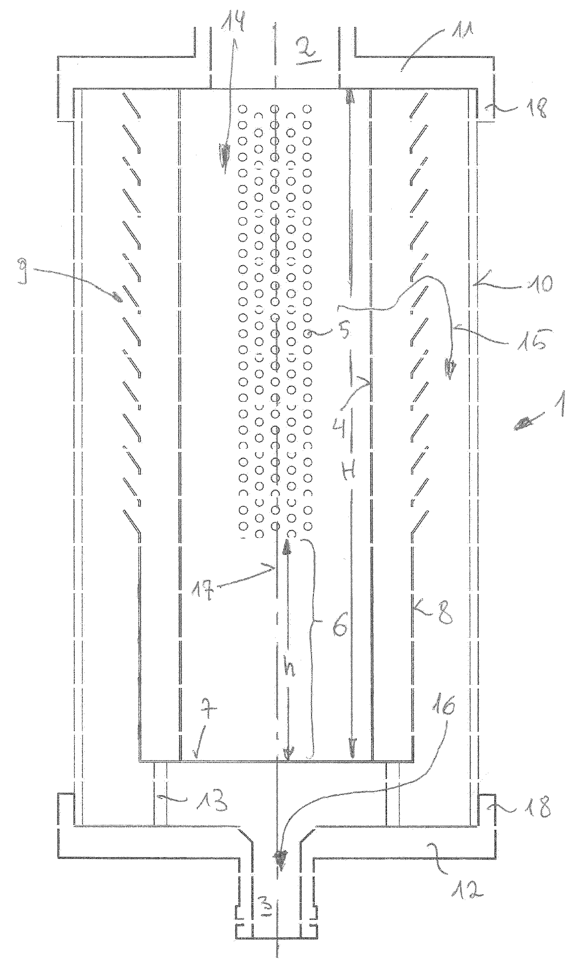

Die Erfindung wird im Folgenden anhand eines Ausführungsbeispiels näher erläutert. Dabei zeigt die einzige Figur in einer Art schematischer Schnitt einen Axialschnitt durch ein erfindungsgemäßes Filter 1. Dieses Filter 1 weist einen Schmutzwasserzulauf 2 und einen Reinwasserablauf 3 auf. Der Begriff Reinwasser ist dabei rein als Vergleich zum Schmutzwasser zu verstehen.

Im seinem Kern besteht das dargestellte Filter 1 aus drei zumindest im Wesentlichen konzentrisch - wegen einer möglichst gleichmäßigen Durchströmung, die zumeist gewünscht wird - zueinander angeordneten rohrförmigen Gebilden. Dargestellt sind kreisrunde, gerade Rohrzylinder, doch können auch polygonale (somit prismatische) und/oder schräge Ausbildungsformen verwendet werden, wenn beispielsweise der zur Verfügung stehende Platz eine solche Ausführung fordert. Der innerste Zylinder ist das eigentliche Rohrfilter 4, es weist eine Höhe H und eine Vielzahl von Filteröffnungen 5 auf, die bevorzugt über den gesamten Mantel verteilt, mit Ausnahme eines unteren Bereiches 6, dessen Höhe h beträgt, vorgesehen sind.

Aus Gründen der Einfachheit sind nur die nahezu in Draufsicht des Schnittes, somit kreisförmig dargestellten Öffnungen und, rein schematisch, durch die Strichlierung, die Öffnungen im Schnittbereich angedeutet. Der Boden 7 des Rohrfilters 4 ist dicht gegenüber dem Zylindermantel geschlossen, ob lösbar oder nicht, spielt für die Erfindung keine große Rolle. Die Bestimmung der Höhen H und h kann unter Umständen mehrdeutig und nicht ganz einfach sein, ist aber für die weiter unten erläuterte Beziehung stets mit technisch ausreichender Toleranz bestimmbar.

Im dargestellten Ausführungsbeispiel ist der Boden 7, durch den das Rohrfilter 4 an seiner unteren Stirnfläche dicht verschlossen wird, Teil eines sogenannten Leitrohres 8. Die Bezeichnung Leitrohr wurde gewählt, da dieses Rohr das im Wesentlichen konzentrisch zum Rohrfilter 4 angeordnet ist, in dem axialen Bereich, in dem das Rohrfilter 4 Filteröffnungen 5 aufweist, Leitöffnungen 9 ausgebildet hat, die der Leitung des Fluids dienen. Diese Leitöffnungen sind ebenfalls um den Umfang verteilt, stehen also quasi - aber nicht notwendigerweise eins zu eins - aber über die Fläche betrachtet, durchaus entsprechend, den Filteröffnungen 5 gegenüber.

Außerhalb des Leitrohres 8 befindet sich ein rohrförmiger Außenmantel 10, der das Filter 1 nach außen abdichtet. Bevorzugt besteht der Außenmantel 10 aus durchsichtigem Material, um den Zustand des Filters optisch überprüfen zu können, oder weist zumindest entsprechende durchsichtige Bereiche auf.

Zusammengebaut bzw. zusammengehalten wird das Filter 1 und somit seine Bestandteile durch eine Deckplatte 11 und eine gegenüberstehende Bodenplatte 12. An den einander zugewandten inneren Stirnflächen dieser beiden Platten ruhen die Stirnflächen der einzelnen Rohre bzw. Zylinder bzw. Prismen, dabei sind das Rohrfilter 4 und das Leitrohr 8 über eine radial das Wasser (Fluid) durchlässige Stütze 13 im Abstand von der Bodenplatte 12 gehalten.

Die Funktionsweise ist nun folgende: Im Filterbetrieb strömt Schmutzwasser etwa entlang der Richtung des Pfeils 14 von der Schmutzwasserleitung durch den Schmutzwasserzulauf 2 ins Innere des Rohrfilters 4. Von dort gelangt das gereinigte Wasser, das heißt, das Wasser, das nur Verunreinigungen enthält, die der Größe nach durch die Filteröffnungen 5 gelangen können, durch dieselben nach Außen und beispielsweise entlang des Pfeils 15 im Wesentlichen radial durch den Ringraum zwischen dem Rohrfilter 4 und dem Leitrohr 8 in den Ringraum zwischen den Leitrohr 8 und dem Außenmantel 10. In diesem Außenmantel 10 strömt die gereinigte Flüssigkeit im Wesentlichen axial nach unten, und am Ende parallel zur Bodenplatte 12 radial nach innen zum Reinwasserablauf 3, wie durch den Pfeil 16 angedeutet.

Verunreinigungen fallen, besonders während Betriebspausen, entlang der Innenseite des Rohrfilters 4 in den ohne Filteröffnungen ausgebildeten Bodenbereich 6, der im Inneren des Rohrfilters 4 den Sumpf ausbildet. Dadurch werden immer wieder die Filteröffnungen 5 freigelegt und die Funktionstüchtigkeit des Filters 1 bleibt erhalten.

Wenn, wie oben erwähnt und in vielen Fällen notwendig, die an den Schmutzwasserzulauf 2 angeschlossene Schmutzwasserleitung samt all den Bereichen, mit denen sie verbunden ist (Sammelbehälter für WC-Anlagen, Vorfilter, etc.) durch Rückspülen gereinigt werden soll, so ist es beim dargestellten Filter nicht notwendig, die Schmutzwasserleitung vom Zulauf 2 zu trennen und mit einer eigenen Rückspülleitung zu verbinden, sondern es kann, beispielsweise durch Umstellen eines 4-3-Wegeventils statt der bisher abgezogenen Reinflüssigkeit Reinigungsflüssigkeit an den Ablauf 3 angelegt werden und strömt dann im Wesentlichen umgekehrt zu den Pfeilen 16, 15, 14 durch das Filter 1 in die Schmutzwasserleitung und reinigt, wie vorgesehen, alle damit verbundenen Leitungen und Bereiche.

Dies ist wegen des in einer Variante der Erfindung vorgesehenen Leitrohrs 8 und der darin vorgesehenen Leitöffnungen 9 möglich, da dadurch die Strömung auch im Inneren des Rohrflters 4 beim Rückspülen so beruhigt bleibt, dass die im Sumpf 6 befindlichen Verunreinigungen nicht aufgewirbelt und in die Schmutzwasserleitung zurückgespült werden; es kann somit das Ablassen und das Rückspülen ohne zwischenzeitliche Trennung der Schmutzwasserleitung erfolgen.

Wie in der Figur dargestellt, ist das Filter 1 sehr einfach aufgebaut, die Deckplatte 11 wird mit der Bodenplatte 12 bevorzugt durch ein oder mehrere (nicht dargestellte) Spannelemente, die parallel zur Achse 17 verlaufen, zusammengehalten. Die radiale Justierung erfolgt beim Außenmantel 10 wie dargestellt durch jeweils eine Stulpe 18, kann aber selbstverständlich auch anders erfolgen. Das Leitrohr 8 ist bevorzugt mit seiner Stütze 13 fest verbunden und diese ruht in passenden Vertiefungen der inneren Stirnfläche der Bodenplatte 12, sodass auch deren Justierung festgelegt ist. Die Justierung zwischen dem Leitrohr 8 und dem Rohrfilter 4 kann, beispielsweise durch eine passende Rinne im Boden 7, vorgegeben sein, oder durch entsprechende radiale Abstandhalter im Ringraum zwischen den beiden Rohren.

Bei einer solchen Konstruktion ist es durch Lösen der Spannelemente ohne weitere Maßnahmen möglich, das Filter 1 vollständig zu zerlegen und die Einzelteile leicht und einfach zu reinigen. Dabei ist es auch denkbar, die Stütze 13 mit dem Boden 7 fest zu verbinden und sowohl das Leitrohr 8, als auch das Rohrfilter 4 im Boden 7 so zu fixieren und justieren wie den Außenmantel 10 in der Bodenplatte 12. Dies hat den weiteren Vorteil, dass gerade die beiden Bestandteile, die besonders zum Verschmutzen neigen, jeweils von beiden Stirnseiten aus für eine Reinigung zugänglich sind.

Die Höhe h des Sumpfes 6 macht bevorzugt zumindest 10 % und höchstens 50 % der Höhe H des Rohrfilters 4 aus. Eine geringere Höhe ist nur in Fällen mit wenigen auszufilternden Verunreinigungen ökonomisch sinnvoll, da ansonsten die Reinigungsintervalle zu nahe aufeinanderfolgen, eine größere Höhe verringert die zur Verfügung stehende Filterfläche. In diesem Fall wird auch die Beruhigung des Fluids im Sumpf beim Rückspülen nicht einfach. Es sind die Leitöffnungen besonders im Grenzbereich Sumpf - Filterfläche bedeutsam, da weiter oben entstehende Turbulenzen nur geringen Einfluss auf den Sumpf haben. In diesen Höhen können die Leitöffnungen größer und weniger leitend ausgebildet werden als nahe beim Sumpf.

Die Erfindung ist nicht auf das dargestellte Ausführungsbeispiel beschränkt, sondern kann vielfach abgewandelt und variiert werden. So ist die Wahl der Abmessungen und der Proportionen in Kenntnis der Erfindung und in Kenntnis des jeweiligen Anwendungsgebietes (Grad der Verschmutzung, auftretender Überdruck bzw. Unterdruck, zu erwartende Partikelgrößen, zu erwartende Strömungsgeschwindigkeiten, etc.) möglich, das Filter schlanker oder breiter als abgebildet zu machen. Auch die Abstände zwischen den einzelnen Rohren, somit die Verhältnisse der Radien zueinander, wenn kreisrunde Rohre gewählt werden, hängen von diesen Parametern ab, die aber in der Filtertechnik schon immer verwendet worden sind, sodass sie in Kenntnis der Erfindung hier leicht angewandt werden können.

Die zu verwendenden Materialien sind die gleichen wie bei den bisherigen Filtern, und hängen ebenfalls von den oben angegebenen und weiteren Randbedingungen (Temperatur) ab, die der Fachmann in Kenntnis der Erfindung leicht berücksichtigen kann.

Hervorgehoben soll werden, dass das Filter 1 rein schematisch dargestellt worden ist, so sind die Anschluss- und Ablaufstutzen nur angedeutet, das gleiche gilt für den Außenmantel 10 und insbesondere die Leitöffnungen 9, die je nach auftretenden Geschwindigkeiten und den geometrischen Verhältnissen auch anders geneigt sein können oder überhaupt radial verlaufen können. Ob hier nur Öffnungen zu Beruhigung der Strömung vorgesehen sind, oder, wie angedeutet, richtiggehende Leitflächen ausgebildet werden, hängt wiederum von den schon mehrfach genannten Randbedingungen ab.

### Bezugszeichenliste:

| | | | |
|---|---|---|---|
| 01 | Filter | 11 | Deckplatte |
| 02 | Schmutzwasserzulauf | 12 | Bodenplatte |
| 03 | Reinwasserablauf | 13 | Stütze |
| 04 | Rohrfilter | 14 | Zulauf |
| 05 | Filteröfnung | 15 | Strömung |
| 06 | Sumpf | 16 | Ablauf |
| 07 | Boden | 17 | Achse |
| 08 | Leitrohr | 18 | Stulpe |
| 09 | Leitöffnung | H | Höhe des Rohrfilters |
| 10 | Außenmantel | h | Höhe des Sumpfes |

## Patentansprüche

1. Filter (1) für Fluide mit groben Verunreinigungen, insbesondere Schmutzwasserfilter, mit einem Schmutzwasserzulauf (2), einem Reinwasserablauf (3) und einem dazwischen liegenden Filtergehäuse, in dem ein zumindest im Wesentlichen vertikales Rohrfilter (4) zum Ausfiltern von Verunreinigungen vorgesehen ist, **dadurch gekennzeichnet, dass** der Innenbereich des Rohrfilters (4) mit dem Schmutzwasserzulauf (2) in Fluidverbindung steht, dass sein Äußeres mit dem Reinwasserablauf (3) in Fluidverbindung steht, dass der Mantel des Rohrfilters (4) mit Filter Öffnungen (5) versehen ist, dass der untere Bereich des Mantels durchgehend ausgebildet ist und einen Sumpf (6) ausbildet.

2. Filter nach Anspruch 1, **dadurch gekennzeichnet, dass** die Höhe (h) des Sumpfes (6) zumindest 10 % und höchstens 50 % der Höhe (H) des Rohrfilters ausmacht.

3. Filter nach Anspruch 1 oder 2, **dadurch gekennzeichnet, dass** im Filtergehäuse radial außerhalb des Rohrfilters ein Leitrohr (8) angeordnet ist, das zumindest in einem Bereich oberhalb des Sumpfes (6) mit Leitöffnungen (9) versehen ist.

4. Filter nach Anspruch 3, **dadurch gekennzeichnet, dass** Leitöffnungen (9) in einer Höhe vorgesehen sind, die im Grenzbereich zwischen Sumpf (6) und Filterfläche des Rohrfilters (4) liegt.

5. Filter nach einem der voranstehenden Ansprüche, **dadurch gekennzeichnet, dass** Rohrfilter (4), Leitrohr (8) und Außenmantel (10) zylindrisch ausgebildet sind und zwischen einer Deckplatte (11), die bevorzugt den Schmutzwasserzulauf (2) aufweist, und einer Bodenplatte (12), die bevorzugt den Reinwasserablauf (3) aufweist, durch eine Spannvorrichtung hydraulisch dicht eingeklemmt sind.

6. Filter nach Anspruch 5, **dadurch gekennzeichnet, dass** Rohrfilter (4) und Leitrohr (8) mittels einer Stütze (13) im Abstand von der Bodenplatte gehalten werden.

7. Filter nach Anspruch 5 oder 6, **dadurch gekennzeichnet, dass** Deckplatte (11) und/oder Bodenplatte (12) entlang ihres Umfangs mit zueinander gerichteten, zylindrischen Stulpen versehen ist/sind, die den Außenmantel (10) entlang seines äußeren Umfangs halten.
